(19) Europäisches Patentamt
European Patent Office
Office européen des brevets

(11) Publication number: 0 140 191
A2

# (12) EUROPEAN PATENT APPLICATION

(21) Application number: 84111756.7

(22) Date of filing: 02.10.84

(51) Int. Cl.[4]: B 01 D 53/34
B 01 D 53/14

(30) Priority: 07.10.83 US 539974

(43) Date of publication of application:
08.05.85 Bulletin 85/19

(84) Designated Contracting States:
AT BE CH DE FR GB IT LI LU NL SE

(71) Applicant: Ford, Bacon & Davis Inc.
2201 North Central Expressway
Richardson Texas 75080(US)

(71) Applicant: UNION CARBIDE CORPORATION
Old Ridgebury Road
Danbury Connecticut 06817(US)

(72) Inventor: Taggart, George W.
6230 Joyce Way
Dallas Texas 75225(US)

(72) Inventor: Kimtantas, Charles L.
1906 Baltimore
Richardson Texas 75081(US)

(72) Inventor: Ball, Hubert T.
2513 Windsor
Plano Texas 75075(US)

(72) Inventor: Dibble, John H.
Gilbert Lane
Putnam Valley, N.Y. 10579(US)

(72) Inventor: Butwell, Kenneth F.
2 Lakeview Drive
Newburgh, N.Y. 12550(US)

(74) Representative: UEXKÜLL & STOLBERG Patentanwälte
Beselerstrasse 4
D-2000 Hamburg 52(DE)

## (54) Tail gas treating process.

(57) A process for treating a sulfur-containing gas stream such as the Claus process off-gases by hydrogenation of unreduced sulfur followed by selective hydrogen sulfide absorption resulting in a vent gas that can be discharged directly to the atmosphere without incineration. A gas stream containing substantial unreduced sulfur values relative to the total sulfur concentration in the stream, is passed to a hydrogenation zone along with a hydrogenous gas. The gas stream may be first passed to a hydrolysis zone within which reduced sulfur values are hydrolized to produce hydrogen sulfide and carbon dioxide and the effluent from this zone then applied to the hydrogenation zone. The feed from the hydrogenation zone is cooled and passed to an absorption zone where it is contacted with an aqueous solvent which preferentially absorbs hydrogen sulfide in the presence of carbon dioxide. The absorption solution comprises an alkaline hydrogen sulfide absorbent and an acid having a $pK_a$ of 6 or less in a concentration to protonate 0.1-22% of the alkaline absorbent. The gas stream from the absorption zone is discharged to the atmosphere without prior incineration. Specifically disclosed solvents include solutions of alkanolamines in combination with organic or inorganic acids present in an amount to protonate 2-13% of the absorbent.

./...

EP 0 140 191 A2

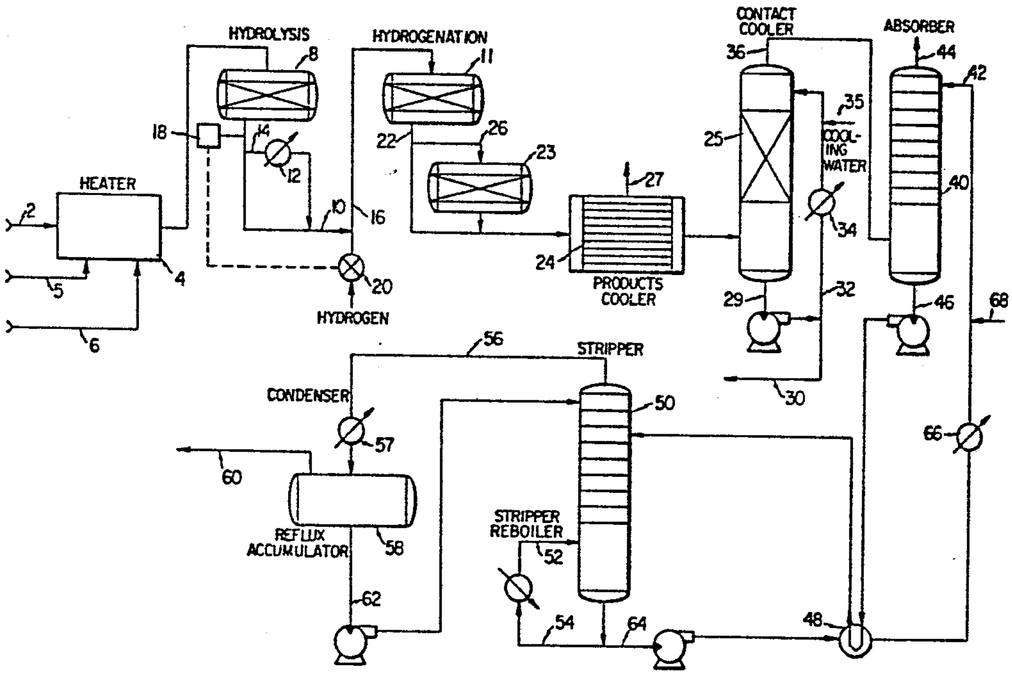

HYDROLYSIS
HYDROGENATION
CONTACT COOLER
ABSORBER
HEATER
HYDROGEN
PRODUCTS COOLER
COOLING WATER
STRIPPER
CONDENSER
REFLUX ACCUMULATOR
STRIPPER REBOILER
2
4
5
6
8
10
11
12
14
16
18
20
22
23
24
25
26
27
29
30
32
34
35
36
40
42
44
46
48
50
52
54
56
57
58
60
62
64
66
68

# TAIL GAS TREATING PROCESS

## Technical Field

This invention relates to the treatment of sulfur-containing gas streams in order to minimize atmospheric pollution, more particularly, to the treatment of such streams in which a substantial portion of the sulfur values contained therein is in the form of unreduced sulfur.

## Background of the Invention

There are various industrial processes which involve the emission of sulfur-containing gaseous effluents that must be treated to reduce pollutants to acceptable levels. The sulfur values in such streams may be in the form of reduced sulfur compounds or unreduced sulfur compounds and typically include mixtures of both types of materials. The most prevalent reduced sulfur compound normally encountered in industrial effluent streams is hydrogen sulfide. However, substantial quantities of reduced sulfur values may also be found in the form of carbonyl sulfide, carbon disulfide, and organic thio compounds such as the mercaptans. The unreduced sulfur values commonly encountered in industrial

effluents are oxidized sulfur compounds, principally sulfur dioxide, and elemental sulfur which may be in the form of a fine mist or vapor.

Gaseous effluents containing contaminating sulfur values may be produced as a result of the combustion or partial combustion of organic materials containing sulfur, the processing of such materials as in the refining of petroleum crude oils, or in Claus-type sulfur recovery processes in which hydrogen sulfide is oxidized through successive reactions to elemental sulfur.In the treatment of industrial effluents, such as Claus unit tail gases, it is a conventional practice to hydrogenate the unreduced sulfur values in the presence of a reducing catalyst to form hydrogen sulfide. Concomitantly with or subsequent to the hydrogenation reaction, carbonyl sulfide and/or carbon disulfide may also be converted to hydrogen sulfide by hydrolysis. For example, U.S. patent number 3,752,877 to Beavon discloses a procedure in which Claus process tail gases are applied to a reaction zone along with a gaseous hydrogen donor such as molecular hydrogen or carbon monoxide. Catalysts such as those containing metals of Groups Va, VIa, VIII, and the Rare Earth series of the Periodic Table may be employed to promote the hydrogenation reaction at moderate temperatures. Within the hydrogenation zone, hydrolysis of carbonyl sulfide and carbon disulfide is also affected in order to produce hydrogen sulfide.Upon the completion of the hydrolysis and hydrogenation reactions, the gaseous stream is applied through a two-stage cooling system to an absorption tower where it is contacted with a solvent

which absorbs the hydrogen sulfide from the gas stream into an aqueous solution. The thus purified gas may be vented to an incineration process to convert the residual hydrogen sulfide to sulfur dioxide, typically in concentrations of about 250 ppmV, for discharge to the atmosphere and the rich solvent then recirculated to a regeneration zone. The lean solvent from the regeneration zone is then recirculated back to the absorption column. Various absorption solutions disclosed in Beavon include solutions containing amines, sulfonates and potassium carbonates, which can be continuously regenerated by steam stripping to produce hydrogen sulfide. Non-regenerated solutions such as caustic soda, lime, and ammonium hydroxide solutions may also be employed. The preferred system disclosed in the Beavon patent involves alkaline absorption followed by oxidation to produce sulfur.

While in Beavon, the hydrolysis and hydrogenation reactions are carried out simultaneously, British patent specification 1,332,337 by Piet et al discloses that these reactions may also be carried out sequentially with hydrogenation of sulfur dioxide to hydrogen sulfide followed by conversion of carbonyl sulfide and carbon disulfide to hydrogen sulfide. The reactions in Piet et al may be catalyzed employing the Group VI and/or Group VIII metals, preferably in the sulfided form, for hydrogenation and catalysts chosen from the group consisting of alumina, bauxite, activated clays, aluminum phosphate, thoria, and magnesium chloride for the hydrolysis reactions. Subsequent to conversion of the various sulfur values to hydrogen

sulfide, the gaseous stream is then subjected to absorption employing either a solid or a liquid absorbent. Solid absorbents include active carbon, metal oxides, etc. The more frequently used liquid absorbents are described as aqueous solutions of alkanolamines, amines, ammonia, alkali metal carbonates, which may or may not be combined with minor quantities of other compounds such as arsenic trioxide, selenic acid and/or telluric acid, potassium phosphate, and sulfolane.

In most cases the sulfur values present as contaminants in industrial waste streams are predominantly in the reduced form, principally hydrogen sulfide with minor amounts of carbonyl sulfide and carbon disulfide. The unreduced sulfur values, principally sulfur dioxide with lesser amounts of elemental sulfur, are present in minor, but many times still substantial, quantities. In some cases, steps are taken to materially increase the proportion of reduced sulfur values present prior to hydrogenation and absorption steps of the type described previously. For example, U.S. patent number 4,153,674 to Verloop et al discloses a process in which a Claus type recovery unit is adapted to be responsive to a feed stream containing high proportions of carbon dioxide as well as carbonyl sulfide and other organic sulfur compounds. In the Verloop et al procedure, a high carbon dioxide content feed stream is passed through a non-selective absorption unit to produce a first, lean gas which is substantially free of hydrogen sulfide, carbon dioxide and carbonyl sulfide and a second gas stream which is rich in these components. This rich gas

stream is mixed with the off-gas from a Claus type sulfur recovery unit to produce a reduction reactor feed stream which is very high in reduced sulfur values and contains only minor amounts of unreduced sulfur. By way of illustration, in the example set forth in columns 8 and 9 of the reference, stream number 12 set forth in the table in column 9, contains only a few percent of unreduced sulfur ($SO_2$) as a proportion of the total sulfur values in the stream.

Further with respect to Verloop et al, the effluent from the reduction reactor is passed sequentially in indirect and direct heat exchange with water to cool the stream to a temperature (6-60°C) at which selective absorption is carried out. The absorbant employed in the absorption zone is preferably an alkanolamine having a tertiary substituted nitrogen atom, e.g. methyldiethanolamine or triethanolamine, in order to reduce the coabsorption of carbon dioxide. The enriched solvent is then regenerated by heating and stripping with steam. As disclosed in Verloop et al, the amount of stripping steam required can be reduced by employing aqueous solutions of alkanolamines containing a strong acidic compound. Specific compounds are the ammonium salts of acetic acid, formic acid, phosphoric acid, and sulfuric acid (or the acids themselves) added in an amount so that of 0.1-15 mole % of the alkanolamine in the solution is present in the acid form.

Disclosure of the Invention

In accordance with the present invention there is provided a new and improved process for the treatment of a sulfur-containing gaseous feed stream by reduction and selective absorption of hydrogen sulfide to produce a vent gas that can be discharged directly to the atmosphere. The process of the present invention provides an improvement over conventional processes because the residual gas from the solvent extraction step contains hydrogen sulfide in an amount less than 10 ppm, the maximum allowable for discharge directly to the atmosphere without incineration. This eliminates the need for incineration and further eliminates the energy drain represented by fuel which would otherwise be burned in an incinerator to promote the oxidation of residual sulfur compounds.

The invention is particulary well suited to the treatment of feed streams containing substantial relative quantities of sulfur dioxide and other unreduced sulfur values. In accordance with one embodiment of the present invention, a gas stream containing unreduced sulfur in an amount of at least about 20 volume % of the total sulfur content of the stream is passed to a hydrogenation zone. Hydrogen is also passed to this zone and the unreduced sulfur values are hydrogenated to produce hydrogen sulfide. The effluent from the hydrogenation zone is passed to an absorption zone where it is contacted with an aqueous solvent which is a preferential absorbent for hydrogen sulfide in the presence of carbon dioxide. The absorption solvent comprises an acid having a $pK_a$ of 6 or less and an alkaline

absorbent for hydrogen sulfide which does not react with the acid with the evolution of carbon dioxide. The alkaline material is present in a concentration within the range of 5-70 weight % and the acid is present in an amount sufficient to protonate 0.1-22 weight % of the alkaline material in the solvent solution. The substantially purified gas stream is vented from the absorption zone to the atmosphere either directly or indirectly through traps or filters or the like, and the rich solvent is withdrawn from the absorption zone and passed to a desorption zone. Hydrogen sulfide is stripped from the solvent within the desorption zone and the thus produced regenerated solvent is recirculated to the absorption zone.

Preferably, hydrogenation of the unreduced sulfur compounds within the hydrogenation zone is carried out without substantial hydrolysis of reduced sulfur compounds present in the feed stream. In a further aspect of the invention, there is provided a process wherein a gas stream containing unreduced and reduced sulfur values is treated by first passing the gas stream to a hydrolysis zone within which the reduced sulfur values are hydrolized to produce hydrogen sulfide and carbon dioxide. The effluent from the hydrolysis zone is then passed to a hydrogenation zone for reaction to produce hydrogen sulfide followed by solvent extraction as described previously.

In yet a further embodiment of the invention, reaction products produced in the hydrolysis zone are analyzed to determine the concentration of unreduced sulfur compounds in the effluent from the hydrolysis

zone. The amount of hydrogen supplied to the hydrogenation zone is then adjusted based upon the results of the analyses.

## Brief Description of the Drawings

The drawing is a schematic illustration of a flow diagram illustrating a preferred embodiment of the invention.

## Detailed Description of the Invention

The present invention provides an improved process for the conversion of sulfur values in a gaseous effluent to hydrogen sulfide and subsequent selective absorption of hydrogen sulfide to provide a product gas having a very low residual hydrogen sulfide content, and which thus can be discharged to the atmosphere without a prior incineration procedure. Specifically, by the method of the present invention, a product gas having a residual hydrogen sulfide concentration of ten parts per million (ppm) or less and a total reduced sulfur concentration of 300 ppm or less may be achieved.

It is preferred in accordance with the invention, to carry out hydrogenation of the oxidized and elemental sulfur values without the substantial hydrolysis of reduced sulfur compounds present in the feed stream. Consistent with this end, a preferred embodiment of the invention involves, prior to passing the feed stream to the hydrogenation zone, passing the stream to a hydrolysis zone. In this zone, reduced sulfur compounds (principally carbonyl sulfide and carbon disulfide) are converted to hydrogen sulfide with the attendant formation of carbon dioxide as a secondary reaction product. This

sequence of steps provides a better ultimate conversion of the feed gas contaminants, including the oxidized and elemental sulfur values, to hydrogen sulfide. In some cases, when high carbon dioxide concentrations are present, the reaction conditions within the hydrogenation zone may result in a partial reversal of the hydrolysis reaction, resulting in an increase in carbonyl sulfide concentration. Thus, as described in greater detail hereinafter, hydrolysis may also be carried out subsequent to the hydrogenation procedure.

After the hydrogenation and optional hydrolysis steps, the gas stream is passed through one or more cooling stages to an absorption zone. The absorption zone is operated under conditions and by employing a solvent solution which provides for the selective absorption of hydrogen sulfide in preference to the carbon dioxide content of the gas stream. The absorption solvent employed in the invention is an aqueous solution of an alkaline hydrogen sulfide adsorbent and an acid having a $pK_a$ of 6 or less. As will be understood by those skilled in the art, the $pK_a$ value is equal to the negative common logarithm of the dissociation constant for the acid in question. In the case of polyprotic acids, the dissociation constant for the first hydrogen atom is employed at arriving at the $pK_a$ value.

In accordance with a broad aspect of the present invention, the absorbent material may be an organic or an inorganic compound which is present in a concentration within the range of 5-70 weight percent and which does not react with the acid to produce carbon dioxide. Thus, inorganic solutes, which may

be added to water to form the aqueous absorbent solution, include alkali metal and ammonium hydroxides, basic alkali metal, and ammonium salts such as alkali metal borates, and alkali metal and ammonium phosphates such as tripotassium phosphate or dipotassium hydrogen phosphate. It will be recognized from the foregoing description that the alkali metal and ammonium carbonates should not be used since they will react with the acid to produce carbon dioxide in solution. Organic hydrogen sulfide absorbents which may be employed in formulating the solvent solution include organic amines. Such compounds may take the form of substituted or unsubstituted aliphatic, cycloalkyl, aryl or heteraryl amines. Certain basic amino acids and amides are absorbent of hydrogen sulfide and may also be employed. Suitable organic compounds thus include dimethyl formamide, morpholine, and various amino alcohols and particularly the alkanolamines, including the mono- or poly- alkanolamines. Thus, examples of suitable absorbents include aqueous solutions of monoethanolamine, diethanolamine, triethanolamine, alkylalkanolamines such as methyldiethanolamine and ethylaminoethanol, diisopropanolamine, di-n-propanolamine, n-propanolamine, isopropanolamine, cyclohexylaminoethanol, and 2-amino-2-methyl-1-propanol. The tertiary amines exhibit a greater tendency for the preferential absorption of hydrogen sulfide in the presence of carbon dioxide than do the primary amines and to a lesser extent, the secondary amines. Accordingly, it will be preferred in practicing the present invention, to use a tertiary

amine such as methyldiethanolamine or triethanolamine. A particulary suitable tertiary amine is methyldiethanolamine. Preferably, the alkaline absorbent for hydrogen sulfide is present in the aqueous solution in an amount within the range of 20-60 weight percent.

As noted previously, the acids employed in the present invention have a $pK_a$ value of 6 or less. Desirably, the acid employed for this purpose will have a $pK_a$ value of 5 or less, and in most cases it will be preferred to employ a relatively strong acid having a $pK_a$ value of 4 or less. In any case, the acid is present in an amount sufficient to protonate 0.1-22% of the alkaline material. Preferably, the acid is present in an amount to protonate 2-13% of the alkaline absorbent. Either organic or inorganic acids may be employed as the protonating additive. Inorganic acids useful for this purpose include phosphoric acid, phosphorous acid, sulfuric acid, nitrous acid, pyrophosphoric acid, and tellurous acid. Suitable organic acids which may be employed in the present invention include acetic acid, formic acid, adipic acid, benzoic acid, n-butyric acid, chloroacetic acid, citric acid, glutaric acid, lactic acid, malonic acid, oxalic acid, ortho-phthalic acid, succinic acid, o-toluic acid. The acid employed in the present invention may be added directly to the aqueous medium or the acid may be formed in-situ by adding an acid forming material. For example, sulfur dioxide may be added to the water in order to form sulfurous acid.

A preferred acid for use in the present invention is phosphoric acid which does not present

the corrosion problems attendant to the use of various other acids. In the case of the preferred absorbent solution, i.e. equal parts of methyldiethanolamine and water, phosphoric acid may be employed in an amount within the range of 0.1-4.5 weight percent and preferably within the range of 0.5-2.5 weight percent.

As noted previously, the sulfur contaminants in industrial off-gas streams are mostly in the reduced form with the unreduced sulfur values providing a minor proportion of the total sulfur content. In Claus-type sulfur recovery processes, as well as other industrial processes, the unreduced sulfur may be present in amounts of only a few percent based on the total sulfur content. Thus, in the specific examples in the aforementioned patent to Beavon, the proportion of unreduced sulfur compounds expressed in terms of the total sulfur compounds present in the Claus tail gases is about 6% in one case and about 10% in another. In the examples set forth in the aforementioned British patent specification to Piet et al, the unreduced sulfur compounds in the Claus off-gas are present in amounts of about 11-13 % of the total sulfur contaminants in the gas. In other instances, the concentration of unreduced sulfur values, while still in minor proportions, are present in substantially greater amounts. For example, Claus type recovery processes may be operated in some cases to provide a substantially higher content of unreduced sulfur wherein the sulfur content of the off-gases is ideally about one-third unreduced sulfur compounds and about two-thirds reduced sulfur compounds. The process of the present invention is

particulary well suited to the treatment of gases having these somewhat higher concentrations of unreduced sulfur compounds and a preferred application of the present invention is with respect to the treatment of such gases. More specifically, a preferred application of the invention is in the treatment of a gas stream containing unreduced sulfur in an amount of at least about 30% by volume of the total sulfur content, and the invention will be described in detail in this regard.

Turning now to the drawing, a feed stream 2 comprised of Claus plant tail gas is applied to an in-line heater 4 along with fuel gas, e.g. methane, and air supplied via lines 5 and 6, respectively. The output from heater 4 is in turn applied to a hydrolysis zone such as a continuous reactor 8. Within the heater, the gas stream is heated to a temperature sufficient to initiate the hydrolysis reaction. Typically, the feed stream will be heated at this point to a temperature within the range of 400-700°F for this purpose. A preferred temperature for the hydrolysis reactor is about 600°F since this temperature is sufficient to initiate the reaction and to vaporize any entrained liquid sulfur. The hydrolysis reaction within hydrolysis reactor 8 may proceed with or without the additional reagents and the presence of a hydrolysis catalyst. Under some conditions, steam may be added to the hydrolysis zone in order to promote the hydrolysis reaction. Also hydrolysis catalysts such as those described previously may be employed. Particulary useful catalysts are those based on active alumina, titania and other metal oxides of Group IVB and Group IIIA

metals at space velocities in the range of about 500-5,000 standard cubic feet of gas per cubic foot of catalyst. Where such a catalyst is used the space velocity preferably will be about 1000 $SCF/ft^3$.

The effluent from the hydrolysis reactor 8 is applied via line 10 to a hydrogenation reactor 11. An optional cooling zone 12 is provided in bypass manifolding 14 associated with line 10. In the event the temperature of the hydrolysis effluent is consistent with the temperature desired in the hydrogenation zone, the effluent is passed directly via line 10 to the hydrogenation zone. However, in some cases it may be desired to cool the effluent stream prior to hydrogenation. For example, this is desirable if high temperature hydrogen is used for hydrogenation or if the effluent temperature is high enough that the additional temperature rise in hydrogenation would exceed values which permit use of conventional materials of construction. In this case, appropriate three-way two-position valves (not shown) in the bypass manifolding are operated to direct all or part of the effluent stream through the cooling zone 12. Cooling may be affected by indirect heat exchange.

In addition to the effluent from the hydrolysis reactor 8, a hydrogen donor gas is applied via line 16 to the hydrogenation zone. The hydrogenation supply may be obtained from any suitable source including hydrogen present in the effluent from the tail gas heater as a combustion product or it may be available from a donor gas. For example, a suitable donor gas is carbon monoxide which reacts with water in the presence of a catalyst in accordance with the

well-known water gas shift reaction to produce hydrogen. It is preferred to supply molecular hydrogen via line 16 and a controller 20 to the hydrogenation reactor, and the hydrogen may be generated by any suitable means. For example, it may be produced by burning methane in air to provide a supply stream containing hydrogen, carbon monoxide, carbon dioxide and water. Where hydrogen is generated at an elevated temperature in this manner, usually it will be desirable to cool the hydrogenous gas stream to as low a hydrogenation temperature as feasible prior to introduction into the hydrogenation zone 11.

The amount of hydrogen supplied to hydrogenation reactor 11 should be an amount somewhat in excess of stoichiometric equivalent for the reduction of sulfur dioxide and elemental sulfur to hydrogen sulfide in accordance with the following reactions.

$$SO_2 + 3H_2 \rightarrow H_2S + 2H_2O \quad (1)$$

$$S_n + nH_2 \rightarrow nH_2S \quad (2)$$

Usually it will be preferred to provide the input stream to the hydrogenation zone with an amount of hydrogen within the range of 1.1-2.0 of the stoichiometric requirement. In order to satisfy this objective, the effluent line from the hydrolysis reactor 8 is provided with a gas analysis unit 18, which either continuously or periodically monitors the sulfur dioxide content in the effluent gas. This measurement may be taken as a relative indication of the total quantity of unreduced sulfur compounds in the effluent and an appropriate output signal is applied to a controller 20 which adjusts the feed rate of hydrogen (or donor gas) through line 16.

Within the hydrogenation zone or hydrogenation reactor 11, sulfur dioxide and elemental sulfur are converted to hydrogen sulfide in accordance with reactions (1) and (2) above. The principal reaction will, of course, be the conversion of sulfur dioxide to hydrogen sulfide. The hydrogenation normally will be carried out at a temperature within the range of about 300-1200°F with a temperature within the range of about 500-800°F usually being preferred. Catalysts may or may not be employed in the hydrogenation zone. At temperatures above about 500°F under normal operating pressure conditions of about 17 psia, hydrogenation with molecular hydrogen may proceed without the presence of a catalyst. At lower temperatures, a catalyst normally will be required. Catalytic hydrogenation is also preferred to accelerate the hydrogenation of sulfur dioxide in preference to the hydrogenation of $S_2$, $S_4$, $S_6$, and $S_8$.

The use of catalysts within the hydrogenation zone will also be preferred where the hydrogen supply involves the use of a hydrogen donor gas such as carbon monoxide. In this regard, a catalyst is most effective in promoting the water gas shift reaction at temperatures within the range of about 300-800°F Temperatures within this range may also be employed during hydrogenation.

Useful hydrogenation catalysts include the commercially available catalysts noted previously. Specifically, these may include materials containing metals of the Groups VA, VIA, VIII and the Rare Earth series of the Periodic Table. Preferred catalysts at this step of the invention include cobalt molybdenum,

iron, chromium, vanadium, thorium, nickel, tungsten and uranium and mixtures of two or more of these metals.

The successive hydrolysis and hydrogenation zones may be defined by separate series connected catalyst beds within a common reaction vessel. This mode of operation may be economically advantageous, particularly when an intervening cooling step is not required.

Upon completion of the hydrogenation reaction, the effluent gases are withdrawn via line 22 and applied to a two-stage cooling zone comprised of an indirect heat exchange reaction products cooler 24 and a direct heat exchange contact cooler 25. In the first cooler 24 the gas stream is circulated in indirect heat exchange with water to produce low-pressure steam which is withdrwn via line 27 and which may be used in the process as described hereinafter. About one-half or more of the heat value in the hydrogenation effluent is extracted in the first cooling stage. The effluent from the first stage, which typically may be at a temperature of about 320°F is then applied to the second stage cooler 25 where it is cooled in direct contact with the cooling water.

It will be recalled that the hydrogenation step eliminates substantially all of the sulfur dioxide present in the gas stream. Accordingly, when the cooling water is circulated through the contact cooler in direct contact with the gas stream, the heated cooling water withdrawn through line 29 contains only hydrogen sulfide and can be handled without serious corrosion problems. The heated

water from contact cooler 25 may be completely or partially applied via line 30 to a processing unit (not shown) where dissolved hydrogen sulfide can be extracted from the water. This may be accomplished by any suitable technique such as steam stripping. The remaining portion of the condensate is recirculated via line 32 to a heat exchanger 34 for cooling and thence back into the cooling tower. Make up water (if required) is added via line 35. The gaseous effluent from contact cooler 25 is at or below the dew point of the water in the incoming gas feeding the contact cooler so as to avoid dilution of the extraction solvent in the absorption step. Preferably the effluent gas passed via line 36 to the absorption zone is at a temperature well below the water dew point of the incoming gas, e.g. 110°F, and below the temperature of the solvent in the absorption zone.

Returning to a discussion of the hydrogenation step, in some cases, the carbon dioxide in the feed stream to hydrogenation reactor 11 may be relatively high, e.g. on the order of 30 vol.% or more. In this case, the conditions of the hydrogenation reaction may be such as to partially reverse the hydrolysis reaction of carbonyl sulfide to hydrogen sulfide, resulting in an increase in the carbonyl sulfide concentration in the effluent from hydrogenation reactor 11. To accommodate this possibility, an optional hydrolysis stage 23 is provided in bypass manifolding 26 associated with line 22. In the event the hydrogenation conditions are such as to partially reverse the hydrolysis reaction, appropriate valves (not shown) may be operated to direct the effluent

from hydrogenation reactor 11 through the second hydrolysis reactor 23. The output from the hydrolysis reactor 23 is then applied to the cooling stages as described previously.

The absorption zone 40 preferably is in the form of a continuous-contact absorption column with counter current flow between the hydrogen sulfide containing gas and the absorbent solution. Thus, as illustrated in the drawing, the gas feed stream enters the column near the bottom and is passed in direct counter current flow exchange with the previously described absorbent solution which is applied near the top via line 42. Alternatively, concurrent contact between the gas and the absorbent solution can be used in accordance within the scope of the present invention. The absorption column may take the form of a column having a plurality of discrete absorption trays or a packed column filled with a permeable packing such as pall or Raschig rings, as will be understood by those skilled in the art. In either case, the number of absorption zones is limited in order to accommodate the selective absorption of the hydrogen sulfide into the absorbent solution while minimizing the absorption of carbon dioxide in order to arrive at an effluent gas from line 44 which is low in hydrogen sulfide and high in carbon dioxide. By reference to a discrete tray column, the number of trays is limited in order to promote hydrogen sulfide absorption while retarding carbon dioxide absorption. Specifically, in the preferred embodiment of the invention, the absorption column has from 6 to 18 trays and more preferably from 11 to 15 trays. Similar considerations apply in

the case of a packed column. In this case, the "height equivalent to a theoretical plate" (HETP) for the packing material may be calculated by techniques well known to those skilled in the art. The column will then be packed to a height equivalent to the desired number of theoretical plates for the equilibrium contacts between the gas and the absorbent as described above.

The vent gas from the absorption column is applied via line 44 to a suitable discharge zone. For example, the gas may be vented to the atmosphere either directly or indirectly through filters and the like without the need for an incineration step. The rich solvent is withdrawn via line 46 from the bottom of the tower and pumped through an indirect heat exchanger 48 to a desorption zone or stripping tower 50. The stripping tower may be of any suitable type in which the hydrogen sulfide is stripped from the solvent solution to regenerate fresh absorbent solution which may then be recirculated to the absorption column. Preferably, the stripping tower 50 takes the form of a conventional stripper with reboiler in which low pressure steam indirectly heats an absorbent solution to produce stripping vapors which pass upward through the rich solvent in direct counter-current flow. Thus, the steam output from the reaction products cooler 24 may be applied via line 27 to line 52 to heat the bottom of the stripping column, with condensate removed from the reboiler. The top gas withdrawn from the stripping tower 50 through line 56 is condensed by passage in indirect- heat exchange with a cooling water or air cooled exchanger 57 to a reflux accumulator 58. The

system is operated at a pressure such that the hottest solution temperature is below the threshold of thermal degradation. The reflux accumulator temperature is held as low as practical to reduce water losses and dilution of the product stream of hydrogen sulfide. Removal of hydrogen sulfide occurs via line 60. The gaseous hydrogen sulfide removed through line 60 may then be applied back to the Claus plant. The product hydrogen sulfide is contained in an acid gas stream consisting almost entirely of hydrogen sulfide, carbon dioxide and water vapor. Condensate withdrawn from the reflux accumulator is applied through line 62 to the top of the stripping tower as reflux.

Stripped absorbent is withdrawn from the bottom of the stripping column via line 64 and passed through heat exchanger 48 in indirect heat exchange with the rich absorbent solution to a solvent cooler 66 where it is passed in indirect heat exchange with cooling water or with air or a combination of air and water in separate exchangers. The absorbent liquid is stripped down to a very small amount, for example, 0.0004 to 0.02, preferably 0.003 to 0.001 mole of hydrogen sulfide per mold of alkaline material. Make-up materials are added to the solvent stream by means of line 68 to arrive at the proper composition for the absorbent solution. The regenerated stream is then applied via line 42 to the top of the absorbent column 40.

The results achieved in accordance with the present invention may be illustrated by reference to the following example.

EXAMPLE

The exemplary procedure was carried out in a facility in which tail gas from a three-reactor Claus sulfur recovery unit was used as the feed stream. The tail gas was preheated by mixing hot combustion products into the tail gas stream to produce a stream at a temperature of 570°F and a pressure of 17.0 psia having the composition set forth in Table I.

Table I

| Component | Vol % |
|---|---|
| COS | 0.0502 |
| $CS_2$ | 0.0251 |
| $H_2S$ | 0.796 |
| $SO_2$ | 0.398 |
| $CO_2$ | 7.865 |
| $N_2$ | 55.455 |
| CO | 0.747 |
| $H_2O$ | 34.474 |
| S (as $S_1$) | 0.190 |

The stream was introduced into a hydrolysis reactor employing a promoted activated alumina catalyst at a space velocity of about 750 SCF/$ft^3$ of catalyst. The effluent from the hydrolysis reactor contained about .005 mole percent of carbonyl sulfide and only trace amounts of carbon disulfide. The output from the hydrolysis reactor was enriched with hydrogen and reacted in a hydrogenation zone over a conventional cobalt-molybdenum catalyst. The effluent from the hydrogenation zone had a hydrogen sulfide concentration of about 1.49% and undetectable quantities of sulfur dioxide and elemental sulfur. The output stream from the hydrogenation zone was

subjected to a two-stage cooling procedure which resulted in the stream containing about 1.98 volume percent hydrogen sulfide at a temperature of about 100°F, which was introduced into the absorber. The stripped absorbent solution applied to the absorption zone was an aqueous solution of 48 weight percent methyldiethanolamine having a concentration of phosphoric acid in an amount of about 1.4 weight percent. The absorbent solution was passed in a counter current flow with the feed stream at a rate of 183 gallons per minute per mole of hydrogen sulfide. The residual gas vented from the absorber had a composition as indicated in Table II.

Table II

| Component | Vol % |
|---|---|
| COS | 10 ppm |
| $CS_2$ | None detectable |
| $SO_2$ | None detectable |
| $S_1$ | None detectable |
| $H_2S$ | $<$ 1 ppm |
| $CO_2$ | 9.01% |

From the foregoing description it will be recognized that the present invention provides a major improvement in the process economics involved in obtaining effluent levels which are acceptable in terms of satisfying air quality requirements. Thus, for a typical Claus type plant having a capacity of 1000 tons per day, treatment of the tail gas in accordance with the present invention will result in total sulfur loss being reduced to about 30 pounds per day. About 21 pounds would appear as hydrogen

sulfide and about 8 as carbonyl sulfide. It will also be recognized that the invention is applicable to various other industrial processes. Examples include the stack gases from sulfur-ore roasters and power-plant stack gases where sulfur fuels are employed in the fuel stream.

Having described specific embodiments of the present invention, it will be understood that modifications thereof may be suggested to those skilled in the art, and it is intended to cover all such modifications as fall within the scope of the appended claims.

CLAIMS

1. In the treatment of a gas stream containing unreduced sulfur and reduced sulfur values in order to minimize pollution attendant to the discharge of said gas stream into the atmosphere, the method comprising:

(a) passing said gas stream containing unreduced sulfur in an amount of at least about 20% by volume of the total sulfur content of said gas stream and a hydrogenous gas to a hydrogenation zone,

(b) hydrogenating said unreduced sulfur within said zone to produce hydrogen sulfide,

(c) passing said gas stream from said hydrogenation zone to an absorption zone,

(d) within said absorption zone, contacting said gas stream with an aqueous solution which is a preferential absorbant for hydrogen sulfide in the presence of carbon dioxide and which comprises a water-soluble alkaline hydrogen sulfide absorbent in a concentration with the range of 5-70 wt.% and an acid having a $pK_a$ of 6 or less in a concentration to protonate 0.1-22% of the alkaline absorbent,

(e) discharging said gas stream from said absorption zone,

(f) passing rich solvent from said absorption zone to a desorption zone,

(g) within said desorption zone, stripping hydrogen sulfide from said solvent to produce a regenerated lean solvent, and

(h) recirculating said regenerated solvent to said absorption zone.

2. The method of claim 1 wherein said gas stream contains unreduced sulfur in an amount of at least about 30% by volume of the total sulfur content of said gas stream.

3. The method of claim 1 wherein the hydrogenation of said unreduced sulfur within said hydrogenation zone is carried out without the substantial hydrolysis of reduced sulfur compounds.

4. The method of claim 1 further comprising the step of, prior to passing said gas stream to said hydrogenation zone, passing said gas stream to a hydrolysis zone, within said hydrolysis zone, hydrolizing reduced sulfur compounds in said gas stream to produce hydrogen sulfide and carbon dioxide, and withdrawing said gas stream from said hydrolysis zone for passage to said hydrogenation zone.

5. The method of claim 1 wherein absorption is carried out in a column absorption zone having a plurality of discrete trays or theoretical plates within the range of 6 to 18 trays or theoretical plates.

6. The method of claim 1 wherein said acid has a $pK_a$ of 5 or less and is present in such solution in an amount to protonate 2-13% of the alkaline absorbent.

7. The method of claim 6 wherein said acid is phosphoric acid.

8. The method of claim 1 wherein said absorbent is a tertiary amine.

9. The method of claim 1 wherein said absorbent is methyldiethanolamine present in said aqueous solution in a concentration within the range of 20-60 wt.% and wherein said acid is phosphoric acid present in a concentration within the range of 0.1-4.5 wt%.

10. In the treatment of a gas stream containing unreduced and reduced sulfur values in order to minimize pollution attendant to the discharge of said gas stream into the atmosphere, the method comprising:

(a) passing said gas stream to a hydrolysis zone, within said hydrolysis zone, hydrolizing reduced sulfur values in said gas stream to produce hydrogen sulfide and carbon dioxide,

(b) withdrawing said gas stream from said hydrolysis zone and passing said stream and a hydrogenous gas to a hydrogenation zone,

(c) within said hydrogenation zone, hydrogenating unreduced sulfur values to produce hydrogen sulfide,

(d) passing said gas stream from said hydrogenation zone to an absorption zone,

(e) within said absorption zone, contacting said gas stream with an aqueous solution which is a preferential absorbent for hydrogen sulfide in the presence of carbon dioxide and which comprises a water-soluble alkealine hydrogen sulfide absorbent in a concentration within the range of 5-70 wt.% and an acid having a $pK_a$ of 6 or less in a concentration to protonate 0.1-22% of the alkaline absorbent,

(f) discharging said gas stream from said absorption zone,

(g) passing rich solvent from said absorption zone to a desorption zone,

(h) within said desorption zone, stripping hydrogen sulfide from said solvent to produce a regenerated lean solvent, and

(i) recirculating said regenerated solvent to said absorption zone.

11. The method of claim 10 further comprising the step of analyzing the reaction products produced in said hydrolysis zone to determine the concentration of unreduced sulfur compounds in the effluent stream from said hydrolysis zone, and adjusting the amount of hydrogenous gas supplied to said hydrogenation zone to provide an amount of hydrogen in an amount within the range of 1.1-2.0 of the stoichiometric equivalent required for hydrogenation of said unreduced sulfur compounds.

12. The method of claim 11 further comprising the step of cooling the effluent gas stream withdrawn from the hydrolysis zone prior to passing said gas stream to said hydrogenation zone.

13. The method of claim 10 wherein said absorbent is methyldiethanolamine present in said aqueous solution in a concentration within the range of 20-60 wt.% and wherein said acid is phosphoric acid present in a concentration within the range of 0.1-4.5 wt%.

14. The method of claim 13 wherein said phosphoric acid is present in a concentration within the range of 0.5-2.5 wt. %.

15. The method of claim 14 wherein absorption is carried out in a column absorption zone having a plurality of discrete trays or theoretical plates

within the range of 11 to 15 trays or theoretical plates.

0140191

1 / 1

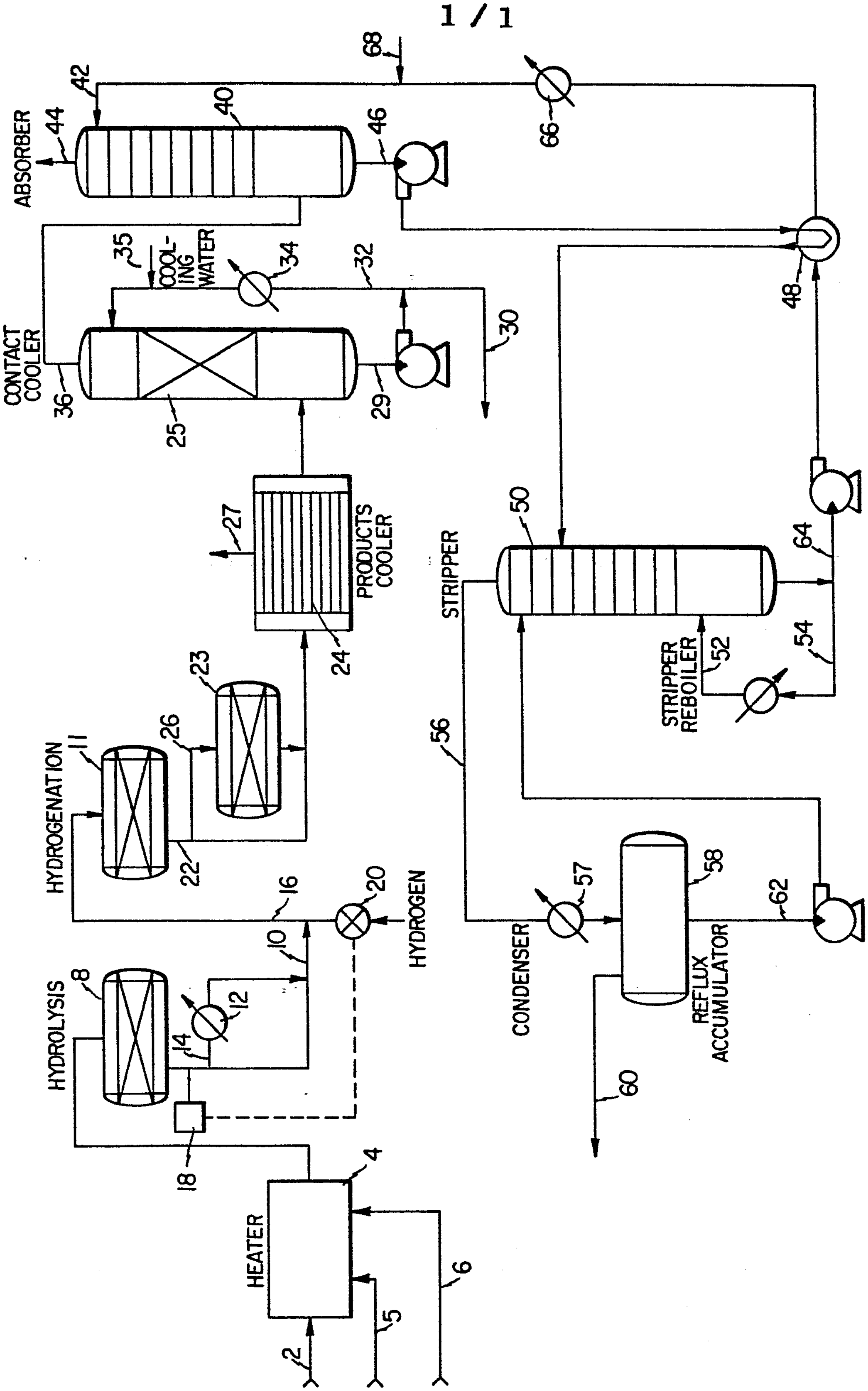

HEATER
HYDROLYSIS
HYDROGENATION
HYDROGEN
PRODUCTS COOLER
CONTACT COOLER
COOL-ING WATER
ABSORBER
STRIPPER
STRIPPER REBOILER
CONDENSER
REFLUX ACCUMULATOR
2
4
5
6
8
10
11
12
14
16
18
20
22
23
24
25
26
27
29
30
32
34
35
36
40
42
44
46
48
50
52
54
56
57
58
60
62
64
66
68